# EUROPÄISCHE PATENTSCHRIFT

(11) **EP 2 859 787 B1**
(45) Veröffentlichungstag und Bekanntmachung des Hinweises auf die Patenterteilung: **12.10.2016**
(21) Anmeldenummer: 14182059.7
(22) Anmeldetag: 25.08.2014
(51) Int. Cl.: A01D 45/02

(54) **Verfahren zum Betreiben einer Pflückeinrichtung mit abstandsveränderlichen Pflückplatten**
Method for operating a picking device with deck plates with adjustable distance
Procédé d'utilisation d'un dispositif de cueillette avec plaques de cueillette à distances variables

(30) Priorität: 23.09.2013 DE 102013110498
(43) Veröffentlichungstag der Anmeldung: 15.04.2015
(73) Patentinhaber: CLAAS Selbstfahrende Erntemaschinen GmbH, 33428 Harsewinkel (DE)
(72) Erfinder: Zentner, Seth, Omaha, NE Nebraska 68138 (US)

(56) Entgegenhaltungen:
- EP-A1- 2 412 228
- WO-A1-2014/130523
- WO-A2-2013/078328
- US-A1- 2011 173 942

## Beschreibung

Aus der EP 2 412 228 A1 ist ein Verfahren zum Betreiben einer Pflückeinrichtung gemäß dem Oberbegriff des Anspruches 1 bekannt. Die Pflückeinrichtung gemäß der EP 2 412 228 A1 weist mittels einer Aktorik abstandsveränderliche Abstreifplatten auf, zwischen denen sich ein Pflückspalt ausbildet. Die Pflückspaltweite, das heißt der horizontale Abstand zwischen den einander gegenüberliegend angeordneten Abstreifplatten, wird voreingestellt. Die voreingestellte Pflückspaltweite zwischen den Abstreifplatten wird in Abhängigkeit von dem Vorhandensein einer von den Pflanzenstängeln auf die Abstreifplatten seitwärts gerichteten Druckkraft mittels der Aktorik verändert, indem die Pflückplatten entweder voneinander beabstandet oder aufeinander zubewegt werden. Die Ansteuerung der Aktorik erfolgt durchmesserabhängig, so dass bei einem Überschreiten eines vorgebbaren Wertes der von dem Erntegut auf die Pflückplatten ausgeübten Druckkraft die Aktorik angesteuert wird, um die Pflückspaltweite zu vergrößern. Nach einer vorgebbaren Zeitspanne, innerhalb derer der vorgebbare Wert nicht erneut überschritten wurde, wird die Spaltweite wieder auf den voreingestellten Wert zurückgeführt.

Als nachteilig an dem aus der EP 2 412 228 A1 bekannten Verfahren erweist sich insbesondere die relativ späte Erfassung einer Durchmesseränderung in dem abzuerntenden Bestand, da die Durchmesseränderung erst erfassbar ist, wenn der Pflanzenstängel sich bereits zwischen den Abstreifplatten befindet. Hieraus resultiert ein zeitlicher Versatz bei der Anpassung der Pflückspaltweite. Dieser kann dazu führen, dass es auf Grund einer vorangegangenen Abstandsänderung der Abstreifplatten zu groß eingestellten Pflückspaltweite Kornverluste auftreten, die aus einem Einziehen des unteren Endes der Frucht durch unterhalb der Abstreifplatten angeordneten Pflückwalzen resultiert (so genanntes butt shelling).

Aufgabe der vorliegenden Erfindung ist es, ein Verfahren zum Betreiben einer Pflückeinrichtung sowie eine Pflückvorrichtung bereitzustellen, welche eine flexiblere Anpassung an sich ändernde Ernteguteigenschaften beziehungsweise Erntebedingungen ermöglichen.

Diese Aufgabe wird erfindungsgemäß durch die kennzeichnenden Merkmale des Verfahrensanspruches 1 sowie dem auf eine Pflückeinrichtung gerichteten Anspruch 10 gelöst.

Vorteilhafte Weiterbildungen sind Gegenstand der jeweiligen Unteransprüche.

Gemäß dem Anspruch 1 vorgeschlagen, dass das Vorhandensein und der Durchmesser der Erntegutstängel vor Eintritt in den Pflückspalt mittels einer vor dem Pflückspalt angeordneten Sensoreinrichtung bestimmt wird und dass in Abhängigkeit von dem bestimmten Durchmesserwert die Weite des Pflückspaltes eingestellt wird. Der frühe Zeitpunkt der Erfassung des Durchmessers eines Erntegutstängels ermöglicht ein schnelleres Reagieren auf sich ändernde Ernteguteigenschaften, das heißt insbesondere die Reduzierung von Erntegutverlusten auf Grund nicht angepasster Pflückspalteinstellungen. Hierzu kann eine Steuereinheit auf dem Trägerfahrzeug vorgesehen sein, die eine Prozessoreinheit sowie eine Speichereinheit, in der Daten und Algorithmen, die von der Prozessoreinheit verarbeitbar sind, hinterlegbar sind, umfasst. Mittels der Steuereinheit sind Algorithmen ausführbar, mittels derer das Vorhandensein und der Durchmesser der Erntegutstängel anhand der Auswertung von Sensorsignalen bestimmbar sind.

Vorteilhafterweise können die Erntegutstängel berührungslos detektiert werden. Die berührungslose Detektion hat gegenüber einer Detektion, die auf der Ausübung eines Drucks der Erntegutstängel auf die Abstreifplatten basiert, wie sie aus dem Stand der Technik bekannt ist, den Vorteil, dass die Komplexität einer Messeinrichtung zur berührungslosen Detektion geringer ist.

Zur berührungslosen Detektion kann vorgesehen sein, dass die Erntegutstängel durch ein kapazitiv arbeitendes Messverfahren detektiert werden. Hierbei wird ein durch das Eindringen eines Erntegutstängels in einen Messbereich eine Signaländerung hervorgerufen, die auf einem Ansteigen der gemessenen Kapazität beruht.

Alternativ können die Erntegutstängel durch ein optisch arbeitendes Messverfahren detektiert werden. So kann beispielsweise die Dauer der Unterbrechung einer Lichtschanke erfasst werden.

Bevorzugt können die Erntegutstängel mittels mechanischer Tastelemente detektiert werden. Die Auslenkung der Tastelemente aus einer definierbaren Nulllage durch den jeweiligen Stängel, der von dem den Tastelementen nachgeordneten Pflückspalt aufgenommen wird, wird sensorisch erfasst. Hierzu können Potentiometer, Linearsensoren oder Winkelsensoren vorgesehen sein, die die Auslenkung der mechanischen Tastelemente erfassen und ein die Auslenkung repräsentierendes Sensorsignal abgeben.

In vorteilhafter Weiterbildung kann die Pflückspaltweite automatisch variiert werden. Im Allgemeinen wird eine Einstellung der Pflückspaltweite vor Beginn des Ernteprozesses von einer Bedienperson vorgegeben. Durch die automatische Variation während des Ernteprozesses wird eine Bedienperson, die das Trägerfahrzeug führt, auf diese Weise von der Aufgabe der Anpassung der Pflückspaltweite während des Ernteprozesses entlastet.

Insbesondere können die Anzahl der Erntegutstängel und deren Abstand zueinander bestimmt werden. Die Kombination aus Zählung und Abstandsbestimmung innerhalb einer Reihe von Erntegutstängeln bietet die Möglichkeit, die Qualität der Aussaat zu prüfen. Insbesondere lässt sich das Setzen zweier Saatkörner unmittelbar nebeneinander wie auch das Auslassen der Aussaat eines einzelnen Saatkorns innerhalb einer Reihe dokumentieren.

Hierzu können die detektieren Durchmesser, die Anzahl der Erntegutstängel sowie deren Beabstandung zueinander georeferenziert aufgezeichnet werden. Durch die Verknüpfung der Daten zum Durchmesser, Anzahl sowie der Beabstandung der Erntegutstängel mit der jeweiligen Position der Messung lässt sich zu einem späteren Zeitpunkt eine Auswertung durchführen. Beispielsweise können die Erntegutstängeldurchmesser kartiert werden, was als ein zusätzlicher Indikator für den Düngeprozess nach einer Neuaussaat herangezogen werden kann. Selbstverständlich lassen sich diese Informationen auch zu statistischen Zwecken auswerten, beispielsweise zu einer Erstellung eines Histogramms der Stängeldurchmesser.

Vorzugsweise kann der Durchmesserwert eines Erntegutstängels aus der Dauer einer Signaländerung und der aktuellen Fahrgeschwindigkeit eines die Pflückeinrichtung tragenden Trägerfahrzeuges bestimmt werden. Hierzu kann eine Steuereinheit auf dem Trägerfahrzeug vorgesehen sein, die eine Prozessoreinheit sowie eine Speichereinheit, in der Daten und Algorithmen, die von der Prozessoreinheit verarbeitbar sind, hinterlegbar sind, umfasst.

Weiterhin betrifft die Erfindung gemäß dem Vorrichtungsanspruch 10 eine Pflückeinrichtung mit paarweise angeordneten abstandsveränderlichen Abstreifplatten, zwischen denen ein einen Eintrittsbereich und einen Abstreifbereich aufweisender Pflückspalt ausgebildet ist, und mit Mitteln zum Einziehen von Pflanzenstängeln in den Pflückspalt, so dass Fruchtstände durch die Abstreifplatten von den Erntegutstängeln abtrennbar sind. Gemäß dem Anspruch 9 wird vorgeschlagen, dass das Vorhandensein sowie der Durchmesser der Erntegutstängel vor Eintritt in den Pflückspalt mittels einer vor dem Pflückspalt angeordneten Sensoreinrichtung bestimmbar sind und dass in Abhängigkeit von dem bestimmten Durchmesserwert die Pflückspaltweite einstellbar ist.

Vorteilhafterweise kann die Sensoreinrichtung als Lichtschranke ausgeführt sein. Hierbei kann die Lichtschranke als eine Anordnung von Sender und Empfänger ausgeführt sein, die getrennt voneinander vor dem Pflückspalt angeordnet werden können. Alternativ kann die Lichtschranke als Reflex-Lichtschranke ausgeführt sein, welche sich durch die Anordnung von Sender und Empfänger in einem gemeinsamen Gehäuse auszeichnet. Bei dieser Variante lässt sich insbesondere der Verkabelungsaufwand reduzieren. Eine Anordnung der Lichtschranke oberhalb von die Abstreifplatten und die Mittel zum Einziehen der Pflanzenstängel abdeckenden Hauben ist ebenfalls denkbar.

Alternativ kann die Sensoreinrichtung als ein Paar Tastelemente ausgeführt sein. Derartige Tastelemente können um eine Drehachse beweglich vor dem jeweiligen Pflückspalt angeordnet sein. Alternativ können die Tastelemente linear beweglich ausgeführt sein. Die von den Stängeln hervorgerufene Bewegung der Tastelemente erfolgt im Wesentlichen quer zum Pflückspalt. Die Auslenkung der Tastelemente kann von einem Potentiometer erfasst und ein entsprechendes Signal an die Steuereinheit zur Auswertung gesandt werden. Diese wertet den Grad der Auslenkung sowie die Dauer der Auslenkung aus, woraus in Verbindung mit der Fahrgeschwindigkeit auf die Durchmesser der Erntegutstängel geschlossen werden kann. Die Auslenkung kann entsprechend der Ausgestaltung der Tastelemente auch von Linearsensoren oder Winkelsensoren erfasst werden.

Vorzugsweise können zumindest zwei Sensoreinrichtungen an der Pflückeinrichtung vorgesehen sein, die zumindest den jeweils äußersten, einen Pflückspalt begrenzenden Abstreifplatten zugeordnet sind. Die Zuordnung jeweils einer Sensoreinrichtung zu den außenseitigen Pflückspalten der Pflückeinrichtung ist eine kostengünstige Variante, die jedoch relativ genaue Resultate liefern kann, da die Signale der jeweils gegenüberliegenden Sensoreinrichtung als Referenz herangezogen werden können. Dies kann von Bedeutung sein, wenn ein Feld angeschnitten wird, und die Pflückeinrichtung nicht über ihre gesamte Breite in den Bestand an Erntegut einfährt. Somit kann vermieden werden, dass versehentlich auf ein Fehlen von Erntegut geschlossen wird.

Weiterhin betrifft die Erfindung einen Mähdrescher mit einer Pflückvorrichtung nach einem der Ansprüche 10 bis 13.

Die vorliegende Erfindung wird nachstehend anhand eines in den Zeichnungen dargestellten Ausführungsbeispieles näher erläutert.

Es zeigen:
- Fig. 1: eine schematische Ansicht einer Pflückvorrichtung an einem Trägerfahrzeug;
- Fig. 2: eine Schnittansicht durch paarweise zusammenarbeitende Pflückwalzen;
- Fig. 3: eine Teilansicht einer Pflückvorrichtung 1 in einer Ansicht von oben;
- Fig. 4: eine schematische Ansicht einer Reihe von Erntegutstängeln;
- Fig. 5: eine Teilansicht einer Pflückvorrichtung 1 in einer Ansicht von oben gemäß einer zweiten Ausführungsform;
- Fig. 6: eine Teilansicht einer Pflückvorrichtung 1 in einer Ansicht von oben gemäß einer dritten Ausführungsform.

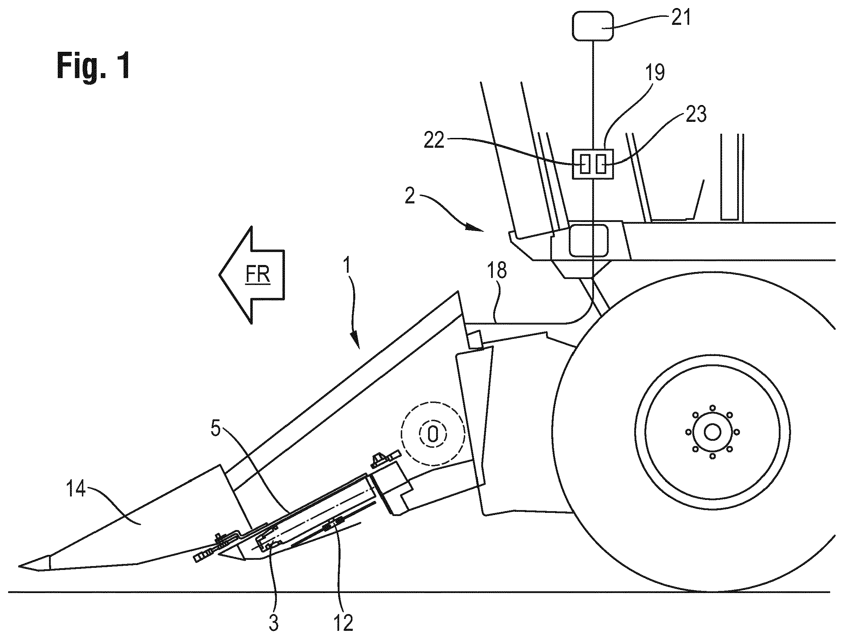

Figur 1 zeigt schematisch eine Pflückvorrichtung 1 zum Ernten von Halmfrüchten, die in ihrem rückwärtigen Bereich an einem nicht näher dargestellten Trägerfahrzeug 2, vorzugsweise einem Mähdrescher oder Feldhäcksler anbringbar ist. Die reihenabhängig arbeitende Pflückeinrichtung 1 erfasst gleichzeitig mehrere Reihen stängeligen Erntegutes. Auf dem Trägerfahrzeug 2 ist eine Steuereinheit 19 angeordnet, die durch Signalleitungen 18 mit der Pflückvorrichtung 1 verbunden ist. Die Steuereinheit 19 umfasst eine Prozessoreinheit 22 sowie eine Speichereinheit 23, in der Daten und Algorithmen, die von der Prozessoreinheit verarbeitbar sind, hinterlegbar sind. Auf dem Dach einer Kabine des Trägerfahrzeugs 2 ist eine Ortungsvorrichtung 21 zur satellitengestützten Positionsbestimmung des Trägerfahrzeuges 2 angeordnet, die mit der Steuereinheit 19 verbunden ist. Zusätzlich kann eine zusätzliche Antenne zum Empfang von Korrektursignalen auf dem Dach der Kabine vorgesehen sein, um die Genauigkeit der Positionsbestimmung zu erhöhen.

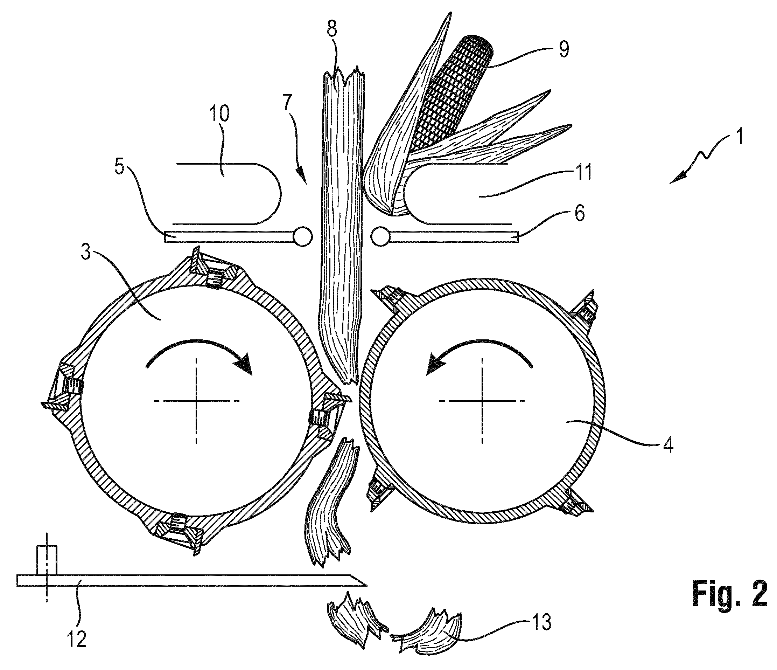

In Fig. 2 ist eine Schnittansicht durch die aus mehreren Reihen paarweise zusammenarbeitenden, gegenläufig angetriebenen Pflückwalzen 3, 4 bestehende Pflückvorrichtung 1 dargestellt. Den zusammenarbeitenden Pflückwalzen 3, 4 ist obenseitig ein durch verschiebbare Abstreifplatten 5, 6 gebildeter Pflückspalt 7 zugeordnet, durch den der Erntegutstängel 8 mittels der Pflückwalzen 3, 4 gezogen wird. Die Pflückwalzen 3, 4 können als ein- oder mehrteilig ausgeführte, zylindrische oder konische Walzen ausgebildet sein. Durch das Hindurchziehen der Erntegutstängel 8 zwischen den Pflückwalzen 3, 4 erfährt der jeweilige Erntegutstängel 8 die Verrottung fördernde Deformationen, bleibt aber in seiner stängeligen Form erhalten. Fruchtstände 9 des Erntegutstängels 8 werden im Bereich des Pflückspaltes 7 an den Abstreifplatten 5, 6 abgestriffen und in an sich bekannter Weise durch oberhalb des Pflückspaltes 7 angeordnete Förderketten 10, 11 in den rückwärtigen Bereich der Pflückwalzen 3, 4 transportiert, wo sie nicht näher dargestellten Arbeitsorganen des Trägerfahrzeuges 2 übergeben werden. Untenseitig kann den Pflückwalzen 3, 4 wenigstens eine Häckseleinrichtung 12 zugeordnet sein, die den durch die Pflückwalzen 3, 4 bereits mechanisch bearbeiteten Erntegutstängel 8 vollständig zerkleinert und die entstehenden Häckselgutstücke 13 gleichmäßig auf dem Boden verteilt. Jede Reihe der Pflückeinrichtung 1 weist einen separaten Pflückspalt 7 auf, der durch die jeweiligen Abstreifplatten 5, 6 gebildet wird.

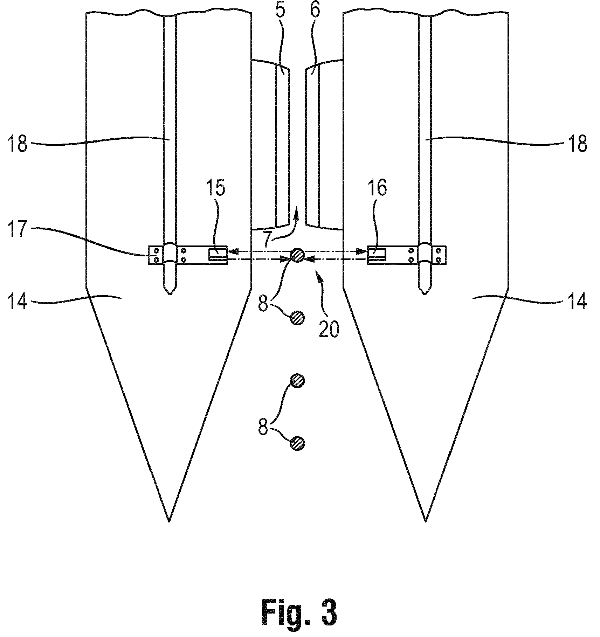

Die Darstellung in Fig. 3 zeigt eine Teilansicht einer Pflückvorrichtung 1 in einer Ansicht von oben. Dargestellt ist ein Paar Hauben 14, unterhalb derer die Pflückwalzen 3, 4 sowie die Förderketten 10, 11, durch die Hauben 14 verdeckt, angeordnet sind. Weiterhin sind die Abstreifplatten 5, 6 zu erkennen, zwischen denen sich der Pflückspalt 7 ausbildet, wie weiter oben bereits ausgeführt. Auf der Oberseite der Hauben 14 ist jeweils eine nach dem Einwegprinzip arbeitende Lichtschranke 20 angeordnet, die einen Sender 15 in Form einer Lichtquelle und einen Empfänger 16 umfasst. Der Sender 15 und der Empfänger 16 sind einander gegenüberliegend mittels einer Halterung 17 auf jeweils einer Haube angeordnet. Die Halterung 17 dient dazu, Sender 15 und Empfänger 16 der Lichtschranke 20 zueinander ausrichten und in dieser Stellung halten zu können. Alternativ können auch Reflex-Lichtschranken zum Einsatz kommen, bei welchen der Sender und der Empfänger parallel zueinander in einem gemeinsamen Gehäuse angeordnet sind. Hierbei wird das von dem Sender emittierte Licht von dem Erntegutstängel 8 reflektiert und von dem Empfänger im gleichen Gehäuse empfangen. Es kann aber auch der Reflex-Lichtschranke gegenüberliegend ein Reflektor angebracht sein, welcher das Licht reflektiert. Befindet sich nun ein Erntegutstängel 8 im Strahlengang, so trifft kein, oder zumindest deutlich weniger Licht in den Detektor der Reflex-Lichtschranke ein und diese schaltet auf "dunkel". Bei dieser Variante kann die Reflex-Lichtschranke und zugehörigem Reflektor auch abweichend von einem 90° Winkel zur Fahrtrichtung angeordnet sein. Die Anordnung der Lichtschranke 20 im Inneren der Hauben 14 ist ebenfalls denkbar. Hierzu können in den einander gegenüberliegenden Seitenwänden der Hauben 14 Öffnungen vorgesehen sein, die durch ein transparentes, verschleißresistentes Material verschlossen sind.

Der Sender 15 und der Empfänger 16 der Lichtschranke 20 sind jeweils durch eine Signalleitung 18 mit der Steuereinheit 19 verbunden, welche auf dem Trägerfahrzeug 2 angeordnet ist. Die Steuereinheit 19 wertet die von der Lichtschranke 20 gesandten Signale mittels eines in der Speichereinheit hinterlegten Auswertealgorithmus aus, um das Vorhandensein und die Anzahl von Erntegutstängeln 8 sowie deren Durchmesser zu erfassen und georeferenziert abzuspeichern, was mittels der durch die Ortungsvorrichtung 21 bereitgestellten Signale ermöglicht wird. Der Durchmesser eines Erntegutstängels 8 wird aus der Dauer der Unterbrechung der Lichtschranke 20 sowie der aktuellen Fahrgeschwindigkeit des Trägerfahrzeuges 2 berechnet.

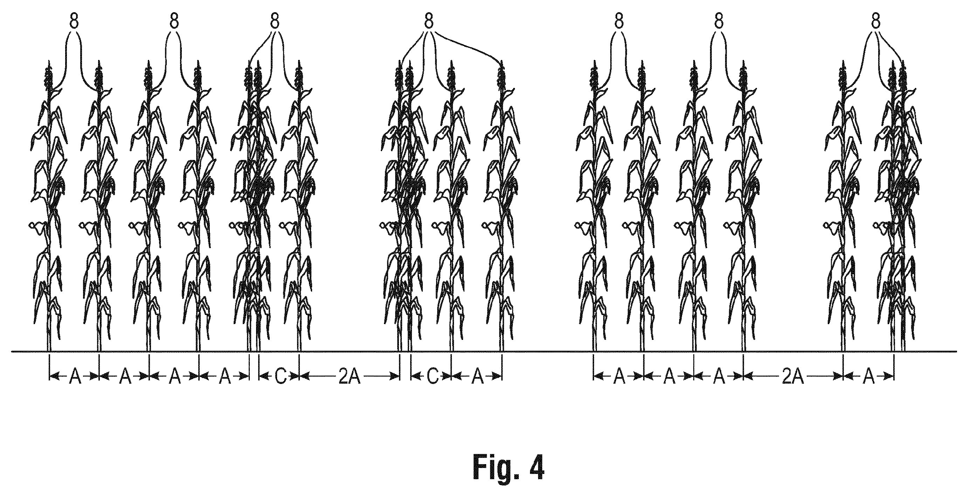

Erfasst werden neben der Anzahl zueinander beabstandeter Erntegutstängel 8 einer Reihe auch doppelte Erntegutstängel 8, das heißt, dass zwei Erntegutstängel 8 unmittelbar nebeneinander gewachsen sind, oder das völlige Fehlen eines Erntegutstängels 8 an einer Stelle, an der einer in Folge eines bei der Aussaat gewählten Abstandes A erwartet wird, wie in Fig. 4 dargestellt ist. Dargestellt ist eine schematische Ansicht einer Reihe von Erntegutstängeln 8, die unter optimalen Bedingungen bei der Aussaat nahezu den gleichen Abstand A zueinander aufweisen würden. Wurde während der Aussaat ein Saatkorn nicht gesetzt, so entsteht eine Lücke, wodurch sich zwischen zwei Erntegutstängeln ein Abstand B ausbildet, der etwa dem zweifachen Wert des Abstandes A entspricht. Hingegen führt das Setzen zweier Saatkörner nebeneinander dazu, dass zwei Erntegutstängel 8 unmittelbar nebeneinander stehen, wie ebenfalls in der Darstellung angedeutet in Fig. 4 ist. Ein Abstand C zum nächsten Erntegutstängel 8 kann entsprechend kleiner sein, als der mit der Aussaat vorgegebene Abstand A. Während der Erfassung wird das jeweilige Positionssignal, welches die Ortungsvorrichtung 21 bereitstellt, herangezogen, um es mit dem jeweils erfassten Wert für Durchmesser und Anzahl wie auch den Abständen zwischen den einzelnen Erntegutstängeln 8 zu verknüpfen. Anhand der Georeferenzierung lässt sich auf das Resultat der Ausbringung von Dünger rückschließen, um bei einer darauffolgenden Aussaat den Prozess der Ausbringung von Dünger auf dem Feld zu verbessern, um ein gleichmäßigeres Wachstum des Erntegutes zu erreichen.

Des Weiteren wird das den Durchmesser repräsentierende Signal verwendet, um die Weite des Pflückspaltes 7 an die Durchmesser der Erntegutstängel 8 flexibler anzupassen. Es soll vermieden werden, dass auf Grund einer zu geringen Weite des Pflückspaltes 7 neben der Frucht auch Material vom Erntegutstängel abgetrennt wird. Ebenso ist eine zu große Weite des Pflückspaltes 7 von Nachteil, da dann Teile der Frucht zwischen die Pflückwalzen 3, 4 gelangen können, was mit entsprechenden Erntegutverlusten einhergeht. Die Anordnung der Lichtschranke 20 vor dem Beginn des Pflückspaltes 7 ermöglicht eine Verlängerung der Reaktionszeit zwischen dem Zeitpunkt der Bestimmung des Durchmessers des Erntegutstängels 8 und dessen Erreichen des Pflückspaltes 7. Die Anpassung der Weite des Pflückspaltes erfolgt automatisiert durch die Ansteuerung einer Aktorik zur Verschiebung der Abstreifplatten 5, 6 durch die Steuereinheit 19 in Abhängigkeit von den ermittelten Durchmesserwerten.

Einen weiteren Aspekt stellt die Anordnung zumindest zweier Lichtschranken 20 auf den Hauben 14 dar, die jeweils zumindest den äußersten, den Pflückspalt 7 begrenzenden Abstreifplatten 5, 6 zugeordnet sind. Somit wird bei einem Anschnitt eines Feldes sichergestellt, dass zumindest einem von einer Lichtschranke 20 überwachten Pflückspalt 7 Erntegutstängel 8 zugeführt werden, denen Anzahl und Durchmesser erfasst wird. Befindet sich die Pflückvorrichtung 1 vollständig im Erntegutbestand, so dient die zweite Anordnung auf der gegenüberliegenden Seite der Pflückvorrichtung 1 als Referenz. Mit den an den beiden Messstellen erfassten Werten für den Durchmesser und das Vorhandensein von Erntegutstängeln 8 ließe sich mittels statistischer Auswertung auf die Zusammensetzung der dazwischenliegenden Reihen mit Erntegutstängeln 8 schließen. Ein entsprechender Algorithmus zur statistischen Auswertung ist in der Steuereinheit 19 hinterlegbar. Die Anordnung nur zweier Lichtschranken 20 an der Pflückvorrichtung 1 stellt eine kostengünstige Alternative dar.

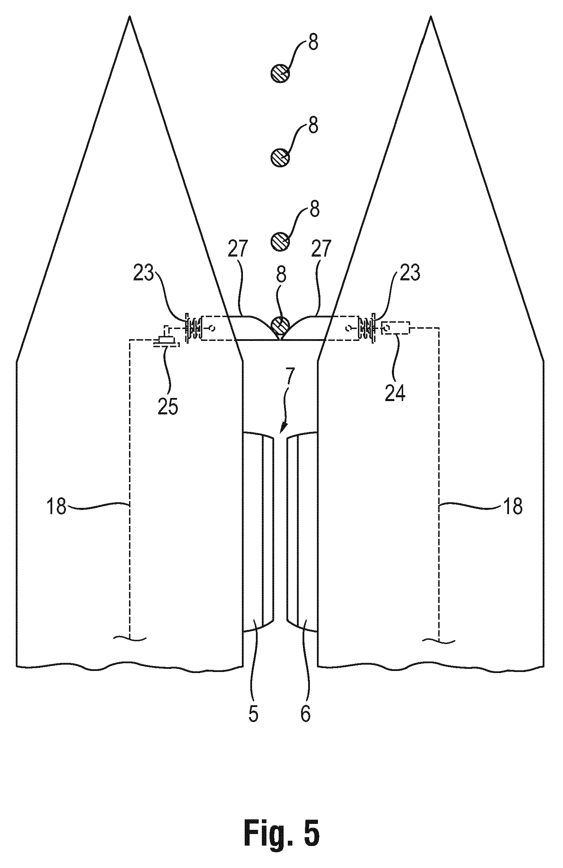

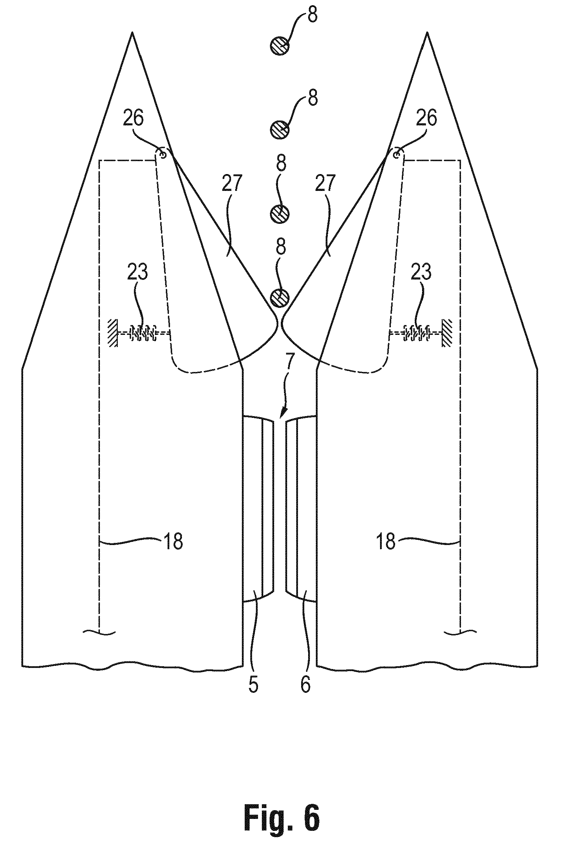

In den Fig. 5 und 6 sind alternative Ausführungsformen dargestellt. So zeigt Fig. 5 einen Aufbau mit paarweise angeordneten mechanischen Tastelementen 27, welche vor dem Pflückspalt 7 angeordnet sind. Die Tastelemente 27 werden durch den jeweiligen Stängel 8 linear ausgelenkt. Dem jeweiligen Tastelement 27 ist ein Federelement 23 zugeordnet, welches eine Rückstellkraft auf das jeweilige Tastelement 27 ausübt, um das Tastelement 27 nach dem Passieren des jeweiligen Stängels 8 zurückzuführen. Die Auslenkung der Tastelemente 27 wird von einem Paar Linearsensoren 24 oder einem Paar Potentiometern 25 erfasst, die ortsfest der Haube 14 zugeordnet sind. Ein die Auslenkung repräsentierendes Signal wird durch die Signalleitung 18 an die Steuereinheit 19 zur Auswertung übertragen. Das jeweilige Federelement 23 stützt sich an einer den jeweiligen Sensor 24 oder 25 aufnehmenden Halterung und dem Tastelement 27 ab.

In Fig. 6 ist eine Ausführungsform dargestellt, bei welcher die mechanischen Tastelemente 27 um eine im Bereich der Spitze der Haube 14 der Pflückvorrichtung 1 angeordnete vertikale Achse 26 relativ zu der Haube 14 schwenkbar angelenkt sind. Die Achse 26 ist mit einem Winkelsensor verbunden, der die Drehbewegung, die auf Grund der Auslenkung der Tastelemente 27 durch die jeweiligen Stängel 8 hervorgerufen wird, erfasst. Die Tastelemente 27 erstrecken sich bei dieser Ausführungsform ausgehend von einem Bereich an der Spitze der Haube 14 in Richtung des Pflückspaltes 7. Wie zuvor beschrieben, werden die Tastelemente 27 dieser Ausführungsform gleichfalls von Federelementen 23 mit einer Rückstellkraft beaufschlagt, um diese nach dem Passieren eines Stängels 8 in ihre Ausgangs- oder Nullstellung zurückzuführen.

**Bezugszeichenliste**

| | | | |
|---|---|---|---|
| **1** | Pflückeinrichtung | **A** | **Abstand** |
| **2** | Trägerfahrzeug | **B** | **Abstand** |
| **3** | Pflückwalze | **C** | **Abstand** |
| **4** | Pflückwalze | **FR** | **Fahrtrichtung** |
| **5** | Abstreifplatte | | |
| **6** | Abstreifplatte | | |
| **7** | Pflückspalt | | |
| **8** | Erntegutstängel | | |
| **9** | Fruchtstand | | |
| **10** | Förderkette | | |
| **11** | Förderkette | | |
| **12** | Häckseleinrichtung | | |
| **13** | Häckselgutstücke | | |
| **14** | Haube | | |
| **15** | Sender | | |
| **16** | Empfänger | | |
| **17** | Halterung | | |
| **18** | Signalleitung | | |
| **19** | Steuereinheit | | |
| **20** | Lichtschranke | | |
| **21** | Ortungsvorrichtung | | |
| **22** | Prozessoreinheit | | |
| **23** | Federelement | | |
| **24** | Linearsensor | | |
| **25** | Potentiometer | | |
| **26** | Winkelsensor | | |
| **27** | Leitelement | | |

## Patentansprüche

1. Verfahren zum Betreiben einer Pflückeinrichtung (1) mit paarweise angeordneten abstandsveränderlichen Abstreifplatten (5, 6), zwischen denen ein Pflückspalt (7) ausgebildet ist, und mit Mitteln zum Einziehen von Erntegutstängeln (8) in den Pflückspalt (7), so dass Fruchtstände (9) durch die Abstreifplatten (5, 6) von den Erntegutstängeln (8) abgetrennt werden, **dadurch gekennzeichnet, dass** der Durchmesser der Erntegutstängel (8) vor Eintritt in den Pflückspalt (7) mittels einer vor dem Pflückspalt (7) angeordneten Sensoreinrichtung (20) bestimmt wird und dass in Abhängigkeit von dem bestimmten Durchmesserwert die Weite des Pflückspaltes (7) eingestellt wird.

2. Verfahren nach Anspruch 1, **dadurch gekennzeichnet, dass** die Erntegutstängel (8) berührungslos detektiert werden.

3. Verfahren nach Anspruch 2, **dadurch gekennzeichnet, dass** die Erntegutstängel (8) durch ein kapazitiv arbeitendes Messverfahren detektiert werden.

4. Verfahren nach Anspruch 2, **dadurch gekennzeichnet, dass** die Erntegutstängel (8) durch ein optisch arbeitendes Messverfahren detektiert werden.

5. Verfahren nach Anspruch 1, **dadurch gekennzeichnet, dass** die Erntegutstängel (8) mittels mechanischer Tastelemente detektiert werden.

6. Verfahren nach einem der Ansprüche 1 bis 5, **dadurch gekennzeichnet, dass** die Pflückspaltweite automatisch variiert wird.

7. Verfahren nach einem der Ansprüche 1 bis 6, **dadurch gekennzeichnet, dass** die Anzahl der Erntegutstängel (8) und deren Abstand (A, B, C) zueinander erfasst werden.

8. Verfahren nach einem der Ansprüche 1 bis 7, **dadurch gekennzeichnet, dass** die detektieren Durchmesser, die Anzahl der Erntegutstängel (8) sowie deren Beabstandung zueinander georeferenziert aufgezeichnet werden.

9. Verfahren nach einem der Ansprüche 1 bis 8, **dadurch gekennzeichnet, dass** der Durchmesserwert eines Erntegutstängels (8) aus der Dauer einer Signaländerung und der aktuellen Fahrgeschwindigkeit eines die Pflückeinrichtung (1) tragenden Trägerfahrzeuges (2) bestimmt werden.

10. Pflückeinrichtung (1) mit paarweise angeordneten abstandsveränderlichen Abstreifplatten (5, 6), zwischen denen jeweils ein einen Eintrittsbereich und einen Abstreifbereich aufweisender Pflückspalt (7) ausgebildet ist, und mit Mitteln zum Einziehen von Erntegutstängeln (8) in den Pflückspalt (7), so dass Fruchtstände (9) durch die Abstreifplatten (5, 6) von den Erntegutstängeln (8) abtrennbar sind, **dadurch gekennzeichnet, dass** das Vorhandensein sowie der Durchmesser der Erntegutstängel (8) vor Eintritt in den Pflückspalt (7) mittels einer vor dem Pflückspalt (7) angeordneten Sensoreinrichtung (20) bestimmbar ist und dass in Abhängigkeit von dem bestimmten Durchmesserwert die Pflückspaltweite einstellbar ist.

11. Pflückeinrichtung 81) nach Anspruch 10, **dadurch gekennzeichnet, dass** die Sensoreinrichtung als Lichtschranke (20) ausgeführt ist.

12. Pflückeinrichtung (1) nach Anspruch 10, **dadurch gekennzeichnet, dass** die Sensoreinrichtung als ein Paar Tastelemente ausgeführt ist.

13. Pflückeinrichtung (1) nach einem der Ansprüche 10 bis 12, **dadurch gekennzeichnet, dass** zumindest zwei Sensoreinrichtungen (20) an der Pflückeinrichtung (1) vorgesehen sind, von denen jeweils eine den jeweils äußersten, einen Pflückspalt (7) begrenzenden Abstreifplatten (5, 6) zugeordnet sind.

14. Mähdrescher mit einer Pflückvorrichtung (1) nach einem der Ansprüche 10 bis 13.

## Claims

1. A method of operating a picking device (1) comprising stripper plates (5, 6) which are arranged in pairs and which are variable in spacing and between which a picking gap (7) is formed, and means for drawing crop material stalks (8) into the picking gap (7) so that fruit bunches (9) are separated from the crop material stalks (8) by the stripper plates (5, 6), **characterised in that** the diameter of the crop material stalks (8) is determined before passing into the picking gap (7) by means of a sensor device (20) arranged in front of the picking gap (7), and the width of the picking gap (7) is adjusted in dependence on the determined diameter value.

2. A method according to claim 1 **characterised in that** that the crop material stalks (8) are detected contact-lessly.

3. A method according to claim 2 **characterised in that** the crop material stalks (8) are detected by a capacitively operating measurement method.

4. A method according to claim 2 **characterised in that** the crop material stalks (8) are detected by an optically operating measurement method.

5. A method according to claim 1 **characterised in that** the crop material stalks (8) are detected by means of mechanical sensing elements.

6. A method according to one of claims 1 to 5 **characterised in that** the picking gap width is automatically varied.

7. A method according to one of claims 1 to 6 **characterised in that** the number of crop material stalks (8) and the spacing (A, B, C) thereof relative to each other are detected.

8. A method according to one of claims 1 to 7 **characterised in that** the detected diameters, the number of crop material stalks (8) and the spacing therefore relative to each other are recorded in georeferenced manner.

9. A method according to one of claims 1 to 8 **characterised in that** the diameter value of a crop material stalk (8) is determined from the duration of a signal change and the currently prevailing travel speed of a carrier vehicle (2) carrying the picking device (1).

10. A picking device (1) comprising stripper plates (5, 6) which are arranged in pairs and which are variable in spacing and between which a respective picking gap (7) which has an entry region and a stripping region is formed, and means for drawing crop material stalks (8) into the picking gap (7) so that fruit bunches (9) are separated from the crop material stalks (8) by the stripper plates (5, 6), **characterised in that** the presence and the diameter of the crop material stalks (8) can be determined before passing into the picking gap (7) by means of a sensor device (20) arranged in front of the picking gap (7) and that the picking gap width is adjustable in dependence on the determined diameter value.

11. A picking device (1) according to claim 10 **characterised in that** the sensor device is in the form of a light barrier (20).

12. A picking device (1) according to claim 10 **characterised in that** the sensor device is in the form of a pair of sensing elements.

13. A picking device (1) according to one of claims 10 to 12 **characterised in that** there are provided at least two sensor devices (20) at the picking device (1), of which respective ones are associated with the respectively outermost stripper plates (5, 6) defining the picking gap (7).

14. A combine harvester comprising a picking device (1) according to one of claims 10 to 13.

## Revendications

1. Procédé pour faire fonctionner un dispositif de cueillage (1) pourvu de plaques racleuses (5, 6) disposées par paires à une distance variable, entre lesquelles est formée une fente de cueillage (7), et de moyens pour introduire des tiges de produit de récolte (8) dans la fente de cueillage (7) de façon que les épis (9) soient séparés des tiges de produit de récolte (8) par les plaques racleuses (5, 6), **caractérisé en ce que** le diamètre des tiges de produit de récolte (8) est déterminé avant l'entrée dans la fente de cueillage (7) au moyen d'un dispositif de détection (20) disposé avant la fente de cueillage (7) et **en ce que** la largeur de la fente de cueillage (7) est réglée en fonction de la valeur de diamètre déterminée.

2. Procédé selon la revendication 1, **caractérisé en ce que** les tiges de produit de récolte (8) sont détectées sans contact.

3. Procédé selon la revendication 2, **caractérisé en ce que** les tiges de produit de récolte (8) sont détectées par un procédé de mesure capacitif.

4. Procédé selon la revendication 2, **caractérisé en ce que** les tiges de produit de récolte (8) sont détectées par un procédé de mesure optique.

5. Procédé selon la revendication 1, **caractérisé en ce que** les tiges de produit de récolte (8) sont détectées au moyen d'éléments palpeurs mécaniques.

6. Procédé selon l'une des revendications 1 à 5, **caractérisé en ce que** la largeur de la fente de cueillage est variable automatiquement.

7. Procédé selon l'une des revendications 1 à 6, **caractérisé en ce que** le nombre de tiges de produit de récolte (8) et leur distance mutuelle (A, B, C) sont détectés.

8. Procédé selon l'une des revendications 1 à 7, **caractérisé en ce que** les diamètres détectés, le nombre de tiges de produit de récolte (8) ainsi que leur distance mutuelle sont enregistrés de manière géoréférencée.

9. Procédé selon l'une des revendications 1 à 8, **caractérisé en ce que** la valeur de diamètre d'une tige de produit de récolte (8) est déterminée à partir de la durée d'une modification de signal et de la vitesse de marche instantanée d'un véhicule porteur (2) portant le dispositif de cueillage (1).

10. Dispositif de cueillage (1) pourvu de plaques racleuses (5, 6) disposées par paires à une distance variable, entre lesquelles est formée chaque fois une fente de cueillage (7) présentant une zone d'entrée et une zone de raclage, et de moyens pour introduire des tiges de produit de récolte (8) dans la fente de cueillage (7) de façon que les épis (9) puissent être séparés des tiges de produit de récolte (8) par les plaques racleuses (5, 6), **caractérisé en ce que** la présence ainsi que le diamètre des tiges de produit de récolte (8) peuvent être déterminés avant l'entrée dans la fente de cueillage (7) au moyen d'un dispositif de détection (20) disposé avant la fente de cueillage (7) et **en ce que** la largeur de la fente de cueillage (7) peut être réglée en fonction de la valeur de diamètre déterminée.

11. Dispositif de cueillage (1) selon la revendication 10, **caractérisé en ce que** le dispositif de détection est réalisé sous la forme d'une barrière lumineuse (20).

12. Dispositif de cueillage (1) selon la revendication 10, **caractérisé en ce que** le dispositif de détection est réalisé sous la forme d'une paire d'éléments palpeurs.

13. Dispositif de cueillage (1) selon l'une des revendications 10 à 12, **caractérisé en ce qu'**au moins deux dispositifs de détection (20) sont prévus sur le dispositif de cueillage (1) et sont respectivement associés aux plaques racleuses (5, 6) les plus extérieures limitant une fente de cueillage (7).

14. Moissonneuse-batteuse équipée d'un dispositif de cueillage (1) selon l'une des revendications 10 à 13.
